# EUROPEAN PATENT APPLICATION

(11) **EP 4 449 857 A1**
(43) Date of publication of application: **23.10.2024**
(21) Application number: 23168865.6
(22) Date of filing: 20.04.2023
(51) Int. Cl.: A01G 25/16, B05B 12/16, B05B 3/04

(54) **IRRIGATION SYSTEM**

(71) Applicant: Husqvarna AB, 561 82 Huskvarna (SE)
(72) Inventor: Kaupp, Rainer, 89143 Blaubeuren (DE); Schenk, Christoph, 89610 Oberdischingen (DE)
(74) Representative: Finkele, Rolf

(57) **Abstract**

A method **(300)** of calibrating a water application device **(110),** particularly a sprinkler **(110)** that includes at least one nozzle **(122)** is disclosed. The method **(300)** includes positioning the at least one nozzle **(122)** at a first angular position **(P1)** followed by starting an outflow, particularly of water, from the nozzle **(122).** After starting the outflow from the nozzle **(122),** a throwing distance **(D)** of the outflow is adjusted. If the throwing distance **(D)** substantially corresponds to a target throwing distance **(d),** then the throwing distance **(D)** is confirmed. The method **(300)** is characterized in that a first flowrate **(F1)** is determined at the confirmed throwing distance. Further, the first flowrate **(F1)** together with the first angular position **(P1)** is stored.

## Description

### TECHNICAL FIELD

The present disclosure relates to an irrigation system, particularly including a sprinkler to deliver water to an area with arbitrarily shaped contour for one or more purposes, as well as associated methods for irrigating the area with arbitrarily shaped contour. Additionally, the present disclosure relates to a method of calibrating a water application device, particularly a sprinkler, wherein the water application device comprises at least one nozzle.

### BACKGROUND

An irrigation system, particularly including a sprinkler may be used to irrigate agricultural crops, lawns, gardens, planted areas, landscapes, golf courses, and other areas. The irrigation system may additionally be used for controlling airborne dust. The irrigation system generally includes a sprinkler, a memory, and a controller configured to communicate with the memory. Further, the sprinkler includes a body defining a water channel, a sprinkler head fluidly coupled to the body, at least one nozzle disposed with the sprinkler head, and a valve fluidly coupled with the at least one nozzle.

The irrigation system often involves a method of applying water in a controlled manner in a way similar to rainfall. However, there may be instances in which working with the irrigation system may involve range constraints and other implementation challenges. Such challenges may be more pronounced when the irrigation system may be used to irrigate areas with arbitrarily shaped contour, such as an irregular lawn surface or in other words a lawn surface with irregular contour. To irrigate such complex landscape shapes, a throwing distance of the water jet (or outflow) emanating from at least one nozzle of the sprinkler must be adjustable. Further, a method of calibrating a water application device may be needed which may be usable in connection with such areas with arbitrarily shaped contour.

In the known irrigation systems, the irrigation systems are calibrated by adjusting the throwing distance of the outflow by moving the valve (ball or washer valve) to get different throw distances of the sprinkler. Further, a position of the valve and a position of the sprinkler head corresponding to the adjusted throwing distance is stored in the memory.

An example of a method that automatically calibrates an irrigation system for achieving a desired water flowrate that results in a desired throw distance for the watering streams discharged by the sprinkler heads is provided in United States Patent US 10,654,062 B2 (hereinafter referred to as '062 reference). The '062 reference provides a method for calibrating the irrigation system comprising adjusting the valve until the flow sensor measures a water flowrate that matches a first predetermined water flowrate This is a first position for the valve. Adjusting the valve opening again by a set amount or until the flow sensor measures a water flowrate that matches a second predetermined water flowrate. This is a second position for the valve. The first predetermined flowrate and the second predetermined water flowrate each corresponds to a throw distance the water stream discharged from the sprinkler head will travel. This relationship between the water flowrate and distance is based on empirical data for the sprinkler. A second equation relating the valve opening to the water flowrate, for a given pressure, is then used to estimate the water effective pressure. Thereby, the '062 discloses a method for calibrating the irrigation system which needs great computing power and a large memory.

### SUMMARY OF THE INVENTION

In view of the above, it is an objective of the present invention to solve or at least reduce the drawbacks discussed above. The objective is at least partially achieved by an improved method of calibrating a water application device, particularly a sprinkler that includes at least one nozzle.

According to an aspect of the present invention, the method includes positioning the at least one nozzle at a first angular position followed by starting an outflow, particularly of water, from the nozzle. After starting the outflow from the nozzle, a throwing distance of the outflow is adjusted. If the throwing distance substantially corresponds to a target throwing distance, then the throwing distance is confirmed. The method is characterized in that a first flowrate is determined at the confirmed throwing distance. Further, the first flowrate together with the first angular position is stored.

Thus, the present disclosure provides a method to calibrate the water application device, particularly the sprinkler. The method may allow the water application device to selectively and precisely irrigate one or more zones in an area with arbitrarily shaped contour, such that each of the one or more zones may be at different distances from the water application device. The method allows a determination of flowrate for different zones in the area with arbitrarily shaped contour. The method may allow for an efficient and quick control, adjustment and calibration of the water application device to water different zones in the area with arbitrarily shaped contour. The method may facilitate judicious use of water by precisely irrigating the area with arbitrarily shaped contour as per requirement. Further, the method may facilitate efficient irrigation of the area with arbitrarily shaped contour.

The at least one nozzle is positioned at the first angular position according to the present invention. This may denote that if an arc shaped contour is assumed in front of the water application device, with the water application device disposed at the center of the arc along the diameter of the arc, then the first angular position of the at least one nozzle may correspond to watering the diametrical extreme of the arc positioned to the left or right of the water application device. Likewise, the at least one nozzle may be rotated to different angular positions to water along the complete arc.

The regular shaped contour like arc shaped contour may not be available during implementation of the water application device. However, to water the area with irregular or arbitrarily shaped contour, or to water different zones in the area with arbitrarily shaped contour, the at least one nozzle may rotate in the same manner as if watering along the regular arc shaped contour. Further, during the rotation, the at least one nozzle may be supplemented with adjustments in operational parameters such as, the flowrate through the at least one nozzle, in order to produce different throwing distances that may be required to irrigate different zones in the area with arbitrarily shaped contour.

Further, the throwing distance may be defined as the distance, which the outflow or water jet emanating from the at least one nozzle, may travel. The throwing distance may be measured with respect to a central axis of the water application device or the sprinkler. The central axis may further be defined as the longitudinal axis of the water application device which may divide the water application device into two equal halves or mirror images.

Further, the target throwing distance may be defined as the distance, which the outflow or water jet emanating from the at least one nozzle may travel to water different zones of the area with arbitrarily shaped contour. Again, the target throwing distance may be measured with respect to the central axis of the water application device or the sprinkler. Further, the target throwing distance may increase or decrease as per the shape of the contour. In other words, the target throwing distance may be a variable parameter.

Determining the throwing distance according to the present invention may particularly denote that a user determines the throwing distance by visually evaluating the distance which the water flow travels before the water flow hits the ground. Further, the target throwing distance may be set and adjusted by the user dependent on the individual needs at a specific angular position. Further, the user may visually evaluate if the throwing distance substantially corresponds to a target throwing distance. Therefore, the user may stand in the area to be watered and observes the water application device and the throwing distance. If the user decides that at the respective angular position, the throwing distance corresponds to the target throwing distance, e.g., the water flow reaches the maximum or desired target point in the area to be watered, the user may confirm the throwing distance in an easy and intuitive way by pressing a confirmation button, e.g., on his mobile device.

Further, the confirmed throwing distance may be the throwing distance that may substantially correspond to the target throwing distance.

Further, the first flowrate may be defined as the flowrate of the at least one nozzle that may correspond to the outflow of water necessary to reach the confirmed throwing distance when the at least one nozzle is positioned at the first angular position.

Further, the first flowrate together with the first angular position is stored according to the present invention and this may denote that the first flowrate together with the first angular position is included in the program instructions stored in a memory. Stored together with according to the present invention may particularly denote that the first flowrate is related to the first angular position. Thereby, a dependency solely between the flowrate and the angular position is stored.

According to an exemplary embodiment of the invention, the adjusting of the throwing distance is a manually adjusting of the throwing distance and/or the adjusting of the throwing distance is performed by a user, particularly via a graphical user interface, more particularly running on a mobile device. The user may manually adjust the flowrate by controlling a valve opening by means of an input unit. Particularly, by manually controlling the valve opening by means of a mobile application. Particularly, the user may manually choose between plus for opening the valve opening and minus for closing the valve opening. The manual adjustment of the flowrate may be based on visual and/ or graphical observation of the arbitrarily shaped contour to be watered. Further, the manual adjustment of the flowrate may be done to adjust the throwing distance of the at least one nozzle by opening respectively closing the valve opening.

In other words, the user may manually increase or decrease the throwing distance of the at least one nozzle which is positioned at the particular angular position by entering a control signal for opening or closing the valve opening dependent on the desired increase or decrease of the throwing distance. The manual increase or decrease of the throwing distance of the at least one nozzle may be done to allow the outflow of the at least one nozzle to reach the target throwing distance. The manual increase or decrease of the throwing distance of the at least one nozzle may be done by visual and/ or graphical observation and/ or analysis. For example, the user may observe that by increasing the throwing distance, the outflow is reaching beyond the target throwing distance, or the user may observe that a further increase in the throwing distance of the at least one nozzle is required to allow the outflow to reach the target throwing distance. Accordingly, the user may manually adjust the throwing distance by means of a mobile device by using a graphical user interface. The graphical user interface may comprise a button, e.g., marked with a plus, for increasing the throwing distance, and a button, e.g., marked with minus, for decreasing the throwing distance. Thereby, an easy to implement and intuitive way of calibrating the water application device may be providable..

According to an exemplary embodiment of the invention, a switch may be provided with the water application device. The switch, when pressed by the user may allow manual adjustment of the throwing distance of the at least one nozzle of the water application device. This may provide the possibility to calibrate the water application device without the need of a mobile device and directly on the water application device.

According to an exemplary embodiment of the invention, a display interface or a touchscreen panel may be provided with the water application device. The display interface or the touch screen panel may display plus and minus buttons to adjust the throwing distance of the at least one nozzle. The user may press the plus or minus buttons as per requirement to accordingly increase or decrease the throwing distance of the at least one nozzle at the particular angular position.

According to an exemplary embodiment of the invention, the steps of positioning, starting, adjusting, confirming, determining, and storing are repeated until the at least one nozzle is calibrated at a pre-determined number of angular positions. A plurality of steps involved in the calibration of the at least one nozzle may be repeated until the water application device is calibrated to completely irrigate the area with arbitrarily shaped contour, particularly the zones defined along the arbitrarily shaped contour which may be at different distances from the water application device. The repetition of steps at the pre-determined number of angular positions may further facilitate precise and accurate calibrating the irrigation or watering, thereby preventing wastage of water.

According to an exemplary embodiment of the invention, the method further includes stopping the outflow from the nozzle and subsequently positioning the at least one nozzle at a second angular position. The first angular position and the second angular position are distanced from each other by a pre-set angular distance. The at least one nozzle may be positioned at a pre-determined number of angular positions, such that the flowrate through the at least one nozzle at pre-determined number of angular positions may be determined. Further, the pre-determined number of angular positions may cover up the complete area with the arbitrarily shaped contour, particularly the complete contour of the area with the arbitrarily shaped contour. Hence, the water application device may be efficiently calibrated for irrigating the area with the arbitrarily shaped contour.

According to an exemplary embodiment of the invention, the first flowrate at the confirmed throwing distance is determined by a flow sensor. The flow sensor may measure the flowrate through the at least one nozzle when the target throwing distance is reached and confirmed by the user. The flowrate measured by the flow sensor along with the corresponding angular position of the at least one nozzle may then be stored for future usage. In other words, the combination of the flowrate and the angular position of the at least one nozzle may be stored in the memory.

According to an exemplary embodiment of the invention, the flow sensor may be a mechanical flow sensor. According to an exemplary embodiment of the invention, the flow sensor may be a vortex flow sensor. According to an exemplary embodiment of the invention, the flow sensor may be an ultrasonic flow sensor. According to an exemplary embodiment of the invention, the flow sensor may be a magnetic flow sensor. According to an exemplary embodiment of the invention, one or more flow sensors may be used to measure the flowrate through the at least one nozzle.

According to an exemplary embodiment of the invention, the adjusting of the throwing distance of the outflow is performed by a user, particularly by using a graphical user interface, more particularly running on a mobile device. The user may use the graphical user interface running on the mobile device, laptop, and the like to adjustably control the throwing distance. Particularly, the graphical user interface may provide various graphical representations of an increase or a decrease of the throwing distance. Particularly, by a "plus button" representing an increase of the throw distance and a "minus button" representing a decrease of the throwing distance. The user with the help of the mobile device may remotely adjust the throwing distance of the outflow from the at least one nozzle. Further, the mobile device may employ wireless communication technology to allow the user to adjust the throwing distance of the outflow.

According to an exemplary embodiment of the invention, the user may operate the plus icon and/or the minus icon in the mobile device application to increase or decrease the throwing distance of the outflow emanating from the at least one nozzle to obtain the target throwing distance when the at least one nozzle may already be positioned at the particular angular position.

According to an exemplary embodiment of the invention, the graphical user interface may include a main window containing a multitude of options. At least one of the options may represent the flowrate for the at least one nozzle of the water application device, particularly sprinkler, along with the corresponding angular position in the format of angular position-flowrate. For example, the option displaying 0°-525 1/h may represent that at 0 degrees angular position a flowrate of 525 liters per hour is stored.

According to an exemplary embodiment of the invention, the wireless technology may be satellite communication, Bluetooth, Wi-Fi, IoT (internet of things), or other well-known wireless technologies.

According to an exemplary embodiment of the invention, the target throwing distance is determined by a user, particularly by visually determining the target throwing distance. The user may be physically present at the irrigation area or may visualize a map of the irrigation area, particularly in the mobile device located at a remote location from the irrigation area to visualize the target throwing distance.

According to an exemplary embodiment of the invention, the user may employ various measurement means to determine the various target throwing distances, particularly along the contour of the arbitrarily shaped area. The measurement means may be a conventional measuring tape, sonar sensors, or other conventional means known and understood in the related art.

According to an exemplary embodiment of the invention, the confirming of the throwing distance includes manually confirming the throwing distance, particularly by using a graphical user interface, in particular running on a mobile device. The user may visually recognize that the throwing distance substantially corresponds to the target throwing distance which the user intended to reach. Alternatively, the user may visualize the real-time image or video of the irrigation area, particularly the area with the arbitrarily shaped contour. The user may visualize the real-time image or video of the water application device operation such as the outflow and visually confirm the throwing distance.

According to an exemplary embodiment of the invention, the user may analyze the irrigation status at pre-determined zones of the irrigation area via the mobile device and then confirm the throwing distance. For example, a software program on the mobile device may be able to gather the moisture data of the pre-determined zone or the zone in focus using signals from one or more sensors such as moisture sensors. The moisture data of the pre-determined zone may indicate watering of the zone by the water application device. This may particularly indicate that the outflow was able to reach the zone, thereby assisting in determining if the throwing distance substantially corresponds to the target throwing distance.

According to an exemplary embodiment of the invention, a controller is configured to perform the method of calibrating the water application device. The controller may be configured to calibrate and further control the working of the water application device. The controller may be responsible to carry out each of the method steps involved in the calibration of the water application device. The controller may include one or more processors configured to execute program instructions stored in a memory to perform each of the method steps involved in the calibration of the water application device. The controller may be communicably coupled to the water application device, and other components that may work together to operate the water application device.

According to an exemplary embodiment of the invention, the controller may be located within or outside the water application device. According to an exemplary embodiment of the invention, the controller may be communicably coupled to the water application device using wired or wireless technologies.

According to a further aspect of the present invention, an irrigation system is provided. The irrigation system includes a water application device, a controller configured to perform the method of calibrating the water application device, and a memory. The controller is further configured to communicate with the memory. Further, the first flowrate together with the first angular position is stored in the memory. Thereby, an irrigation system which is easy and fail-safe calibratable by a user, particularly an inexperienced user, and which may reliably water also arbitrarily shaped areas, may be providable.

According to an exemplary embodiment of the present invention, the irrigation system includes the water application device, the controller configured to perform the method of calibrating the water application device, the memory, a drive mechanism, at least one motor, a power supply, a sensor particularly a flow sensor, a valve, and possibly other components that may work in conjunction to calibrate the water application device, and further operate the water application device to water or irrigate the irrigation areas with the arbitrary shaped contour. The water application device may be a part of an intelligent irrigation system that includes the controller, one or more operational parameter sensors such as, flow sensors, and other electronic circuitries to execute the method to calibrate the water application device.

According to an exemplary embodiment of the invention, the irrigation system may be equally potent or capable to irrigate with a mixture of water and fertifizer, or other fluid.

According to an exemplary embodiment of the invention, the memory may be a RAM, a ROM, a flash memory, or other tangible data storage medium.

According to an exemplary embodiment of the invention, the at least one motor may comprise two motors such that one motor may be a part of the drive mechanism while the other motor may be used to control the position of the valve. Further, the motor which is part of the drive mechanism may possibly be an electric motor or a hydraulic motor. Further, the motor which may be used to control the position of the valve may possibly be a stepper motor, or a servo motor.

According to an exemplary embodiment of the invention, the valve may comprise a plurality of valves. Additionally, the plurality of valves may be components of a multiplexor valve, rather than separate valves. According to an exemplary embodiment of the invention, each of the plurality of valves may be actuated using one or more motors. Additionally, each of the plurality of valves may control a flow of water to the at least one nozzle. For example, a first valve may be used to control the flow of water to a first nozzle. Likewise, a second valve may be used to control the flow of water to a second nozzle.

According to an exemplary embodiment of the invention, the flow of water to each of the at least one nozzle may be controlled independently of the flow of water to the other nozzles of the at least one nozzle through the actuation of the plurality of valves. As a result, individual nozzles may be turned on or off, or the amount of fluid through the nozzles may be adjusted.

According to an exemplary embodiment of the invention, the water application device is a sprinkler. The sprinkler includes a body defining a water channel. The water channel is defined between an inlet and an outlet of the body to allow a flow of water through it. Further, a sprinkler head is fluidly coupled to the body and at least one nozzle is disposed with the sprinkler head. The sprinkler may find application in outdoor (such as gardens, lawns, and the like) or indoor areas to supply or spray water in a controlled manner as per the requirement of the area. The sprinkler of the present invention may be particularly useful in supplying or spraying water to the area with the arbitrarily shaped contour. The sprinkler may be well-connected to a water source, say an underground piping system that may supply water to the water channel of the sprinkler.

According to an exemplary embodiment of the invention, the sprinkler may be designed for use as an in-ground sprinkler. According to an exemplary embodiment of the invention, the sprinkler may be fixed to a ground surface. According to an exemplary embodiment of the invention, the sprinkling may also be used for above-ground surface liquid operations.

According to an exemplary embodiment of the invention, the sprinkler head may be manufactured by three-dimensional printing (also known as additive manufacturing or 3D printing). Use of three-dimensional printing (alternatively, 3D printing) provides versatility of using different materials along with low lead-time in manufacturing and design of the sprinkler head.

According to an exemplary embodiment of the invention, the at least one nozzle may have similar or different cross-sections. Further, when the at least one nozzle may have different cross-section, then each of the at least one nozzle may have different flow characteristics. According to an exemplary embodiment of the invention, the at least one nozzle may have circular or oval or any similar shaped cross-section. The at least one nozzle with circular or oval cross-section may be well suited for providing desired water distribution at long throwing distance or wide throwing distance. According to an exemplary embodiment of the invention, the at least one nozzle may have a drop-shaped cross-section. The drop-shape cross-section may be referred to a cross-section formed as a cone with a hemispherical base. Further, the droplet shape of the cross-section of the at least one nozzle may imply that the section opening is narrowing at its one end while it forms an approximate circular contour on its other end. Further, the at least one nozzle with drop-shaped cross-section may be well suited for providing desired water distribution at narrow or shorter throwing distances. According to an exemplary embodiment of the invention, the at least one nozzle may have a combination of oval and drop-shaped cross-sections. In other words, some of the at least one nozzle may have the oval shaped cross-section and the remaining ones of the at least one nozzle may have drop-shaped cross-section.

According to an exemplary embodiment of the invention, the at least one nozzle may be any number of nozzles, as per the requirement. For example, the at least one nozzle may be five nozzles. Alternatively, the at least one nozzle may be one single nozzle.

According to an exemplary embodiment of the invention, the angular position of the at least one nozzle is adjustable with adjustment in position of the sprinkler head. The angular adjustment of the at least one nozzle may improve or alter the sprinkling range, trajectory, or throwing distances of the outflow on the irrigation area particularly with the arbitrarily shaped contour. Further, the angular adjustment of the at least one nozzle may be beneficial for covering the entire irrigation area, particularly the entire irrigation contour. The at least one nozzle may be fixed with respect to the sprinkler head and the sprinkler head may rotate to facilitate irrigation of the area with the arbitrarily shaped contour.

According to an exemplary embodiment of the invention, a magnitude of the throwing distance of at least one nozzle at a particular angular position is directly linked to the flowrate through the at least one nozzle. In other words, the magnitude of the throwing distance of the at least one nozzle at the particular angular position may be directly proportional to the flowrate of the at least one nozzle. For example, if the angular position of the at least one nozzle is fixed, then a low flowrate through the at least one nozzle may lead to a lower throwing distance. Likewise, a higher flowrate through the at least one nozzle may lead to the higher throwing distance.

According to an exemplary embodiment of the invention, a flow sensor determines the flowrate through the at least one nozzle, if the throwing distance substantially corresponds to a target throwing distance. The flow sensor may be configured to determine or measure the flowrate only at the confirmed throwing distance. This may lead to precise measurement. Further, the flow sensor may consume less power to operate. Further, only required flowrate data may be sent for further processing. This may lead to a less complex algorithm which may otherwise, e.g., require to average out the flowrates of the outflow at different time frames.

According to an exemplary embodiment of the invention, the controller is communicably coupled with the flow sensor. The controller may receive the flowrates at different angular positions and may send the flowrate and the corresponding angular position for storage to the memory. Further, the controller may be communicably coupled to the flow sensor by wired or wireless technology.

Before discussing the invention with the help of the drawings, the invention will be briefly discussed in general. A flowrate is measured and saved. The flowrate may be in accordance with the throwing distance. Further, different flowrates and the angular positions of the sprinkler head give the lawn surface contour (or the arbitrarily shaped contour) which requires irrigation. With this invention, position of the valve (ball or washer) is not saved.

The irrigation system and the method to calibrate the water application device of the irrigation system according to the present invention may lead to less torque on the valve and may further lead to less consumption of electrical power. The irrigation system and the method to calibrate the water application device of the irrigation system according to the present invention may lead to fast adjustment of the flowrate. The irrigation system and the method to calibrate the water application device of the irrigation system according to the present invention may result in a simple sealing of the valve and therefore of the irrigation system.

According to an exemplary embodiment of the invention, the valve position is controlled and adjusted by measuring the flowrate for different lawn (or irrigation area) contours.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a schematic diagram of an irrigation system in accordance with an exemplary embodiment of the present disclosure;
**FIG. 2** illustrates a simplified drawing illustrating exemplary throwing distances from the at least one nozzle of the sprinkler in accordance with an exemplary embodiment of the present disclosure;
**FIG. 3** illustrates a flowchart illustrating a method of calibrating a sprinkler in accordance with an exemplary embodiment of the present disclosure;
**FIG. 4** illustrates a schematic diagram of an irrigation system of **FIG. 1** communicably coupled with a mobile device in accordance with an exemplary embodiment of the present disclosure;
**FIG. 5** illustrates a simplified drawing illustrating an exemplary spot irrigation pattern at different throwing distances from a single spot nozzle of the sprinkler in accordance with an exemplary embodiment of the present disclosure; and
**FIG. 6** illustrates a simplified drawing illustrating an exemplary strip irrigation pattern at different throwing distances from a further single spot nozzle of the sprinkler in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

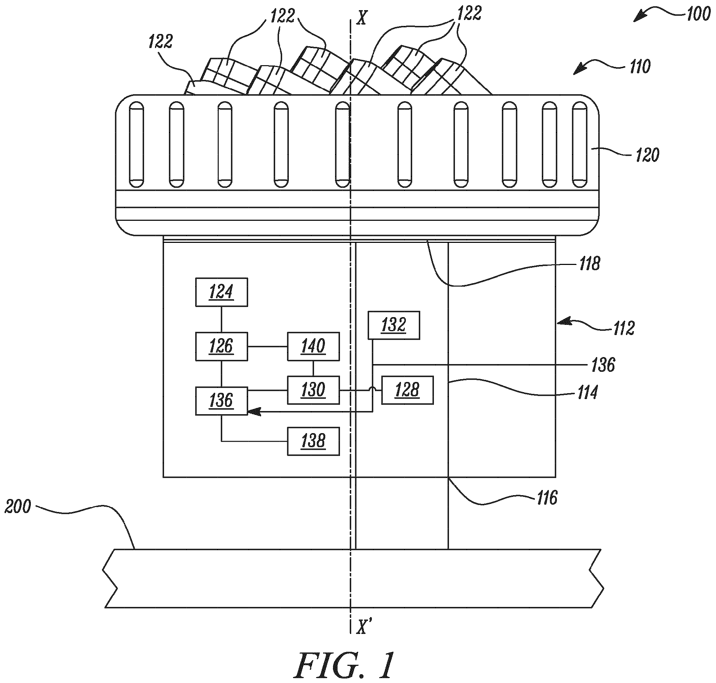

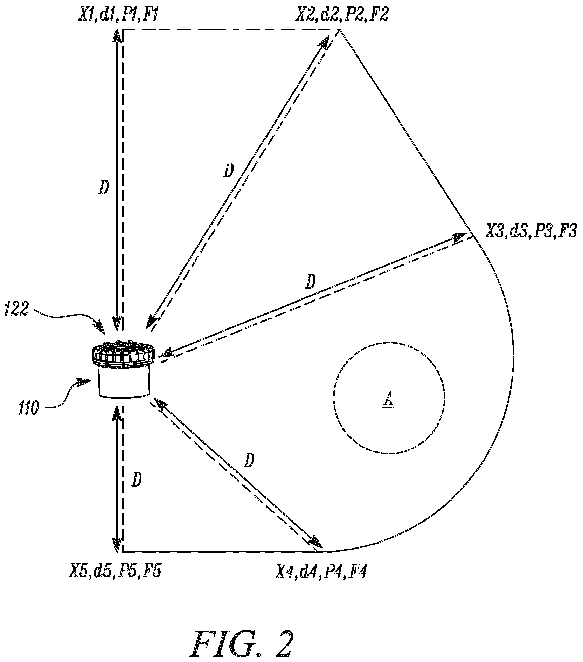

**FIG. 1** illustrates a schematic diagram of an irrigation system **100** according to an exemplary embodiment of the present invention. The irrigation system **100** may be used to irrigate an area **A** (as shown in **FIG. 2**), such as a garden, a lawn, and the like. The irrigation system **100** may be used to irrigate an area A with an arbitrarily shaped contour, such as the area having irregular shape of perimeter or border. In other words, the contour of the area **A** may have different zones **X1**, **X2, X3, X4, X5** (as shown in **FIG. 2**) along the contour such that each of the zones may be at a different distance with respect to the irrigation system **100.** The irrigation system **100** according to the disclosure of the present invention may be configured to irrigate using water, as water is the most frequently used fluid for irrigation.

The irrigation system **100** includes a water application device **110.** The water application device **110** shown in **FIG. 1** is a sprinkler **110.** For the purpose of the present disclosure, the water application device **110** is now interchangeably written as the sprinkler **110.** As illustrated in **FIG. 1****,** the sprinkler **110** includes a body **112.** The body **112** defines a water channel **114.** The water channel **114** is defined between an inlet **116** and an outlet **118** of the body **112.** The inlet **116** of the body **112** is coupled to a water supply line **200,** such as a hose or an in-ground piping. The water supply line **200** may provide a pressurized source of water to the inlet **116** of the body **112.** Further, the water channel **114** may allow a flow of water from the inlet **116** to the outlet **118.**

As also illustrated in **FIG. 1****,** the sprinkler **110** further includes a sprinkler head **120.** The sprinkler head **120** is fluidly coupled to the body **112.** The body **112** may further provide support for the sprinkler head **120.** The sprinkler head **120** is fluidly coupled to the water channel **114** around the outlet **118.** Further, at least one nozzle **122** is disposed with the sprinkler head **120.** In other words, the sprinkler head **120** supports the at least one nozzle **122.** The present disclosure illustrates seven nozzles **122** (as shown in **FIG. 1**)**.** The pressurized water received from the water supply line **200** may reach the at least one nozzle **122** through the sprinkler head **120** which further receives water from the water channel **114.** Further, the at least one nozzle **122** may produce an outflow of the water to be directed to the area **A** having an arbitrarily shaped contour for irrigation. Further, the at least one nozzle **122** may produce the outflow of the water to be directed to different zones **X1**, **X2, X3, X4, X5** along the contour of the area **A**.

With continued reference to **FIG. 1****,** the sprinkler head **120** is a rotary sprinkler head. The sprinkler head **120** may rotate relative to the body **112.** An angular position of the at least one nozzle **122** may be adjustable with adjustment in position of the sprinkler head **120.** The angular adjustment of the at least one nozzle **122** may improve or alter the sprinkling range, trajectory, or throwing distances of the outflow on the area **A** having the arbitrarily shaped contour. Further, the angular adjustment of the at least one nozzle **122** may be beneficial for covering the entire area **A,** particularly the entire irrigation contour. The at least one nozzle **122** may be fixed with respect to the sprinkler head **120** and the sprinkler head **120** may rotate to facilitate irrigation of the area **A** with the arbitrarily shaped contour.

In other words, the rotation of the sprinkler head **120** may lead to the angular adjustment of the at least one nozzle **122.** For example, the rotation of the sprinkler head **120** may rotate the at least one nozzle **122** to a first angular position **P1,** a second angular position **P2,** a third angular position **P3,** a fourth angular position **P4,** and a fifth angular position **P5** and may allow the at least one nozzle **122** to water or irrigate the zones **X1**, **X2, X3, X4,** and **X5,** respectively, as shown in **FIG. 2****,** of the area **A.**

The irrigation system **100** further includes a drive mechanism **124** mounted to the sprinkler **110.** The drive mechanism **124** may be configured to drive the rotation of the sprinkler head **120** about a central axis **X-X'** that extends along the longitudinal direction of the sprinkler **110.** The drive mechanism **124** includes a motor **126** that may drive the rotation of the sprinkler head **120** about the axis **X-X'** through a suitable gear arrangement. The drive mechanism **124** may be configured to drive the rotation of the sprinkler head **120** and resultantly to drive the rotation of the at least one nozzle **122** to different angular positions, such as the first angular position **P1,** the second angular position **P2,** the third angular position **P3,** the fourth angular position **P4,** and the fifth angular position **P5.**

As shown in **FIG. 1****,** the irrigation system **100** further includes a valve **128.** The valve **128** is mounted to the sprinkler **110** and controls the water flow through the water channel **114.** Further, the valve **128** may control a flow through the at least one nozzle **122.** The valve **128** may allow for example, a first flowrate **F1,** a second flowrate **F2,** a third flowrate **F3,** a fourth flowrate **F4,** and a fifth flowrate **F5** through the at least one nozzle **122** (as shown in **FIG. 2**)**.**

Further, the valve **128** may have an open position, a closed position, and a plurality of intermediatory positions. In the open position of the valve **128,** the water may be free to travel from the water supply line **200** to the at least one nozzle **122.** In the closed position of the valve **128,** the water may be substantially entirely prevented to travel from the water supply line **200** to the at least one nozzle **122.** In intermediatory positions, the flowrate of the water through the at least one nozzle **122** may be set to a value that may be less than the maximum flowrate resulting from the valve **128** being in the open position. As a result, the valve **128** may be used to adjust the flow of the water through the at least one nozzle **122** to be set to a desired level, such as the first flowrate **F1,** the second flowrate **F2,** the third flowrate **F3,** the fourth flowrate **F4,** and the fifth flowrate **F5.** This may allow for greater control over the outflow produced by the at least one nozzle **122.**

Further, the position of the valve **128** is controlled by a motor **130.** Further, the valve **128** is positioned in the body **112** of the sprinkler **110.**

Further, the irrigation system **100** includes a flow sensor **132** that determines or measures the flowrate through the at least one nozzle **122.** However, the flow sensor **132** may be configured to measure or determine the flowrate only when a throwing distance **D** (as shown in **FIG. 2**) of the outflow through the at least one nozzle **122,** or simply the throwing distance **D** of the at least one nozzle **122** substantially corresponds to a target throwing distance **d.** The target throwing distance **d** may be a first target throwing distance **d1,** a second target throwing distance **d2,** a third target throwing distance **d3,** a fourth target throwing distance **d4,** and a fifth target throwing distance **d5,** respectively, i.e., **d** = **d1, d2, d3, d4, d5.** The first target throwing distance **d1,** the second target throwing distance **d2,** the third target throwing distance **d3,** the fourth target throwing distance **d4,** and the fifth target throwing distance **d5** may be different in magnitude. Alternatively, at least two of the target throwing distances **d** may be substantially equal dependent on requirements of the area **A.** The first target throwing distance **d1,** the second target throwing distance **d2,** the third target throwing distance **d3,** the fourth target throwing distance **d4,** and the fifth target throwing distance **d5** may correspond to zones **X1**, **X2, X3, X4,** and **X5** respectively, of the arbitrarily shaped area **A.** Thus, the flow sensor **132** may be configured to measure or determine the flowrate only when **D = d,** wherein **d = d1, d2, d3, d4, d5.**

This may be particularly beneficial for the calibration of the sprinkler **110** to irrigate the area **A** with the arbitrarily shaped contour or to irrigate the zones **X1**, **X2, X3, X4,** and **X5** of the area **A** as this may give the exact flowrate, namely the first flowrate **F1,** the second flowrate **F2,** the third flowrate **F3,** the fourth flowrate **F4,** or the fifth flowrate **F5,** required through the at least one nozzle **122** to achieve the target throwing distance **d = d1, d2, d3, d4, d5,** at the respective known angular position, such as the first angular position **P1,** the second angular position **P2,** the third angular position **P3,** the fourth angular position **P4,** and the fifth angular position **P5** of the at least one nozzle **122.**

The throwing distance **D** of at least one nozzle **122** at a particular angular position, such as the first angular position **P1,** the second angular position **P2,** the third angular position **P3,** the fourth angular position **P4,** and the fifth angular position **P5** may be directly linked to the respective flowrate, namely the first flowrate **F1,** the second flowrate **F2,** the third flowrate **F3,** the fourth flowrate **F4,** or the fifth flowrate **F5** through the at least one nozzle **122.**

In other words, the magnitude of the throwing distance **D** of the at least one nozzle **122** at the particular angular position, such as the first angular position **P1,** the second angular position **P2,** the third angular position **P3,** the fourth angular position **P4,** and the fifth angular position **P5** may be directly proportional to the flowrate dependent on the pressure, namely the first flowrate **F1,** the second flowrate **F2,** the third flowrate **F3,** the fourth flowrate **F4,** or the fifth flowrate **F5** through the at least one nozzle **122.** For example, a low flowrate through the at least one nozzle **122** may lead to a lower throwing distance **D.** Likewise, a higher flowrate through the at least one nozzle **122** may lead to the higher throwing distance **D.**

Further, this flow sensor **132** according to the disclosure of the present invention may allow a precise measurement of the flowrate. Further, the flow sensor **132** may consume less power to operate. Further, only required data of the flowrate may be sent further for processing, leading to less complex algorithms which may otherwise require to average out the flowrates of the outflow at different time frames. As shown in **FIG. 1****,** the flow sensor **132** is located downstream of the valve **128** in the direction of flow of the water. Further, the flow sensor **132** produces an output signal **134** that is representative of the flowrate measured by the flow sensor **132.**

With continued reference to **FIG. 1****,** the irrigation system **100** further includes a controller **136** and a memory **138.** The controller **136** is configured to communicate with the memory **138.** For example, the controller **136** may be configured to communicate the first flowrate **F1** together with the first angular position **P1** to the memory **138.** The memory **138** may further store the first flowrate **F1** together with the first angular position **P1** for later retrieval of this information by the controller **136.**

The controller **136** may represent one or more processors and circuitry used to perform functions, such as to calibrate the sprinkler **110,** and to operate the sprinkler **110** during regular usage or application. The processor of the controller **136** may be configured to execute sprinkler or watering program instructions stored in the memory **138** and perform method steps described herein responsive to the execution of the program instructions.

Further, the program instructions may include different valve settings such as the flowrate, but not the opening position of the valve **128,** and the controller **136** may control the valve **128** in response to the valve setting. The valve setting may map a desired flowrate, namely the first flowrate **F1,** the second flowrate **F2,** the third flowrate **F3,** the fourth flowrate **F4,** or the fifth flowrate **F5** through the valve **128** to a specific angular position **P.** This may be provided for a series of angular positions, namely the first angular position **P1,** the second angular position **P2,** the third angular position **P3,** the fourth angular position **P4,** and the fifth angular position **P5** of the at least one nozzle **122.** For example, when the angular position may be 32° and the desired flowrate may be 595 liters per hour, the valve position of the valve **128** is adjusted until the desired flowrate of 595 liters is met.

Further, the program instructions may include the rotation speed settings that may set the rotational speed of the sprinkler head **120.** Execution of the program instructions by the controller **136** may generate control signals to the motor **126** based on the rotation speed settings that may be used to control the motor **126.**

Further, the irrigation system **100** includes a power supply **140,** such as a battery, a capacitor, a solar cell, or other source of electrical energy, that may provide power to the processor of the controller **136,** the motor **126,** the motor **130,** the flow sensor **132** and/or another component of the sprinkler **110** requiring electrical energy.

The irrigation system **100** includes the sprinkler **110,** the controller **136,** the memory **138,** the drive mechanism **124,** the motor **126,** the motor **130,** the power supply **140,** the flow sensor **132** and the valve **128** that may work in conjunction to calibrate the sprinkler **110,** and further operate the sprinkler **110** to water or irrigate the irrigation area **A** with the arbitrary shaped contour. For example, the flow sensor **132** may measure the flowrate and send the output signal **134** that is representative of the flowrate to the controller **136,** which may further send it to the memory **138** for storage.

The controller **136** may be communicably coupled with the flow sensor **132.** The controller **136** may receive the flowrates at different angular positions and may send the flowrate and the corresponding angular position for storage to the memory **138.** Further, the controller **136** may be communicably coupled to the flow sensor **132** by any wired or wireless technology.

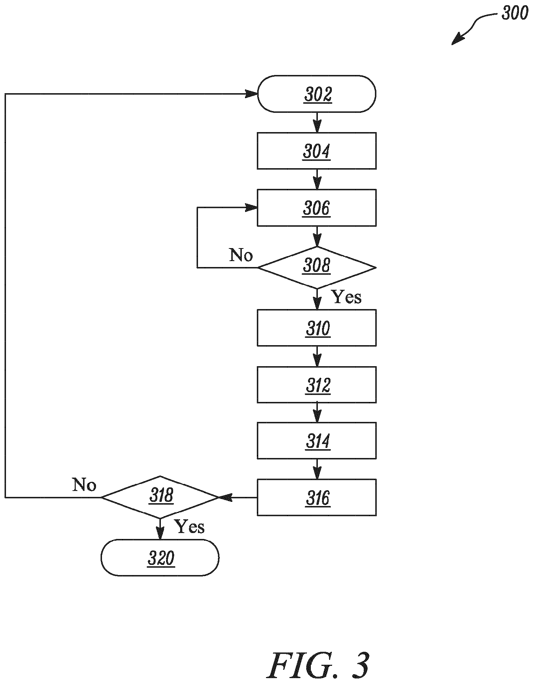

The sprinkler **110,** thus is a part of an intelligent irrigation system **100** that includes the controller **136,** the flow sensor **132,** and other electronic circuitries to execute a method **300** (as shown in **FIG. 3**) of calibrating the sprinkler **110.**

**FIG. 2** illustrates a simplified drawing illustrating exemplary outflow from the at least one nozzle **122** of the sprinkler **110** with the throwing distance **D** according to an exemplary embodiment of the present invention. The sprinkler **110** is configured to irrigate various zones **X1**, **X2, X3**, **X4, X5** of the area **A.** The area **A** may correspond to a garden or a lawn with the arbitrarily shaped contour. As an illustrative example, the zone **X1** requires the target throwing distance **d1** = 8 meters for irrigation. The zone **X2** may require the target throwing distance **d2** = 9.4 meters for irrigation. The zone **X3** may require the target throwing distance **d3** = 8.5 meters for irrigation. The zone **X4** may require the target throwing distance **d4** = 6 meters for irrigation. The zone **X5** may require the target throwing distance **d5** = 4 meters for irrigation.

Further according to an illustrative example, to irrigate the zone **X1**, the at least one nozzle **122** may be positioned at the first angular position **P1** = 0°.Further, to irrigate the zone **X2,** the at least one nozzle **122** may be positioned at the second angular position **P2** = 32°. Further, to irrigate the zone **X3,** the at least one nozzle **122** may be positioned at the third angular position **P3** = 68°. Further, to irrigate the zone **X4,** the at least one nozzle **122** may be positioned at the fourth angular position **P4** = 132°. Further, to irrigate the zone **X5,** the at least one nozzle **122** may be positioned at the fifth angular position **P5 =** 180°.

According to an illustrative example, the outflow from the at least one nozzle **122** may be started to irrigate the zone **X1** with the at least one nozzle **122** at the first angular position **P"** = 0°. During the calibration process of the sprinkler **110,** the first flowrate **F1** is determined using the flow sensor **132.** The first flowrate **F1** is exemplarily determined to be 525 liters per hour. The first flowrate **F1** and the first angular position **P1** are stored in the memory **138.** Further, during the watering operation of the calibrated sprinkler **110,** the controller **136** may retrieve the required first flowrate **F1** and the first angular position **P1** from the memory **138** to enable the sprinkler **110** to water or irrigate the zone **X1** with the desired flowrate **F1** and thereby at the target throwing distance **d1** = 8 meters.

Likewise according to an illustrative example, the outflow from the at least one nozzle **122** may be started to irrigate the zone **X2** with the at least one nozzle **122** at the second angular position **P2** = 32°. During the calibration process of the sprinkler **110,** the second flowrate **F2** is determined using the flow sensor **132.** The second flowrate **F2** may be determined to be 595 liters per hour. The second flowrate **F2** and the second angular position **P2** are stored in the memory **138.** Further, during the watering operation of the calibrated sprinkler **110,** the controller **136** retrieves the required second flowrate **F2** and the second angular position **P2** from the memory **138** to enable the sprinkler **110** to water or irrigate the zone **X2** with the desired second flowrate **F2** and thereby at the target throwing distance **d2** = 9.4 meters.

Likewise according to an illustrative example, the outflow from the at least one nozzle **122** is started to irrigate the zone **X3** with the at least one nozzle **122** at the third angular position **P3** = 68°. During the calibration process of the sprinkler **110,** the third flowrate **F3** is determined using the flow sensor **132.** The third flowrate **F3** may be determined to be 550 liters per hour. The third flowrate **F3** and the third angular position **P3** are stored in the memory **138.** Further, during the watering operation of the calibrated sprinkler **110,** the controller **136** may retrieve the required third flowrate **F3** and the third angular position **P3** from the memory **138** to enable the sprinkler **110** to water or irrigate the zone **X3** with the desired third flowrate **F3** and thereby at the target throwing distance **d3** = 8.5 meters.

Likewise according to an illustrative example, the outflow from the at least one nozzle **122** is started to irrigate the zone **X4** with the at least one nozzle **122** at the fourth angular position **P4** = 132°. During the calibration process of the sprinkler **110,** the fourth flowrate **F4** is determined using the flow sensor **132.** The fourth flowrate **F4** may be determined to be 425 liters per hour. The fourth flowrate **F4** and the fourth angular position **P4** may be stored in the memory **138.** Further, during the watering operation of the calibrated sprinkler **110,** the controller **136** retrieves the required fourth flowrate **F4** and the fourth angular position **P4** from the memory **138** to enable the sprinkler **110** to water or irrigate the zone **X4** with the desired fourth flowrate **F4** and thereby at the target throwing distance **d4** = 6 meters.

Likewise according to an illustrative example, the outflow from the at least one nozzle **122** is started to irrigate the zone **X5** with the at least one nozzle **122** at the fifth angular position **P5 =** 180°. During the calibration process of the sprinkler **110,** the fifth flowrate **F5** is determined using the flow sensor **132.** The fifth flowrate **F5** may be determined to be 320 liters per hour. The fifth flowrate **F5** and the fifth angular position **P5** may be stored in the memory **138.** Further, during the watering operation of the calibrated sprinkler **110,** the controller **136** retrieves the required fifth flowrate **F5** and the fifth angular position **P5** from the memory **138** to enable the sprinkler **110** to water or irrigate the zone **X5** at the target throwing distance **d5** = 4 meters.

**FIG. 3** illustrates a flowchart illustrating a method **300** of calibrating the water application device **110,** particularly the sprinkler **110** that includes the at least one nozzle **122,** according to an exemplary embodiment of the present invention. The method **300** is embodied as an algorithm implemented by the controller **136.** In other words, the controller **136** may be configured to perform the method **300** of calibrating the sprinkler **110.**

In step **302,** the method **300** begins. In step **302,** the method **300** comprises positioning of the at least one nozzle **122** at the first angular position **P1.** The method **300** then continues with step **304** to start the outflow, particularly of water, from the at least one nozzle **122.** Once the step **304** has been executed, the method **300** then continues with step **306.** In step **306,** the throwing distance **D** of the outflow is adjusted. The method **300** then continues with step **308.** In step **308,** it is evaluated if the throwing distance **D** adjusted in step **306** substantially corresponds to the target throwing distance **d.** If the throwing distance **D** adjusted in step **306** substantially corresponds to the target throwing distance **d**, then step **310** follows. In step **310,** the throwing distance **D** is confirmed. Further, if the throwing distance **D** adjusted in step **306** does not corresponds to the target throwing distance **d**, then step **306** is repeated and the throwing distance **D** of the outflow is adjusted again.

Further, the method **300** continues with step **312.** In step **312,** the first flowrate **F1** at the confirmed throwing distance (i.e., when **D** = **d**) is determined. The first flowrate **F1** at the confirmed throwing distance may be determined by the flow sensor **132.** The flow sensor **132** measures the flowrate through the at least one nozzle **122** when the flowrate through the at least one nozzle **122** may be sufficient to produce the outflow to reach the target throwing distance **d.**

The method **300** then continues with step **314.** In step **314,** the first flowrate **F1** together with the first angular position **P1** is stored in the memory **138.**

Further, the steps of positioning **302,** starting **304,** adjusting **306,** evaluating **308,** confirming **310,** determining **312,** and storing **314** are repeated until the at least one nozzle **122** is calibrated at a pre-determined number of angular positions. In other words, the plurality of steps involved in the calibration of the at least one nozzle **122** may be repeated until the sprinkler **110** may be calibrated to completely irrigate the area **A,** e.g., the zones **X1**, **X2, X3, X4,** and **X5** defined along the arbitrarily shaped contour of the area **A.** The repetition of steps at the pre-determined number of angular positions may further facilitate precise and accurate irrigation or watering, thereby preventing wastage of water.

The method **300** further continues with step **316.** In step **316,** the outflow from the at least one nozzle **122** is stopped. The method **300** then continues with step **318.** In step **318,** the controller **136** evaluates if the calibration is done at the pre-determined number of angular positions. If the calibration is done at the pre-determined number of angular positions, then the method **300** continues with step **320.** In step **320,** the method **300** stops. If the calibration is not yet done at the pre-determined number of angular positions, then the method **300** returns to step **302.** In step **302,** this time the at least one nozzle **122** is positioned at the second angular position **P2** and the further steps according to the method **300** of calibrating are repeated.

The method **300** is repeated for N times, wherein N may be an integer such that when N = 1, then the at least one nozzle **122** is positioned at the first angular position **P1.** Further, when N = 2, then the at least one nozzle **122** is positioned at the second angular position **P2** and so on until the at least one nozzle **122** is positioned at the pre-determined number N of angular positions.

Further, the first angular position **P1** and the second angular position **P2** according to the disclosure of the present invention may be distanced from each other by a pre-set angular distance.

Further, the at least one nozzle **122** may be positioned at a pre-determined number of angular positions, such that the flowrate through the at least one nozzle **122** at the pre-determined number of angular positions may be determined. Further, the pre-determined number of angular positions may cover up the complete area **A** with the arbitrarily shaped contour, e.g., the zones **X1**, **X2, X3, X4,** and **X5** defined along the arbitrarily shaped contour of the area **A.** Hence, the sprinkler **110** may be efficiently calibrated for irrigating.

According to an exemplary embodiment of the invention, the adjusting of the throwing distance **D** may be a manually adjusting of the throwing distance **D** and/or the adjusting of the throwing distance **D** may be performed by a user, particularly via a graphical user interface, more particularly running on a mobile device **400.**

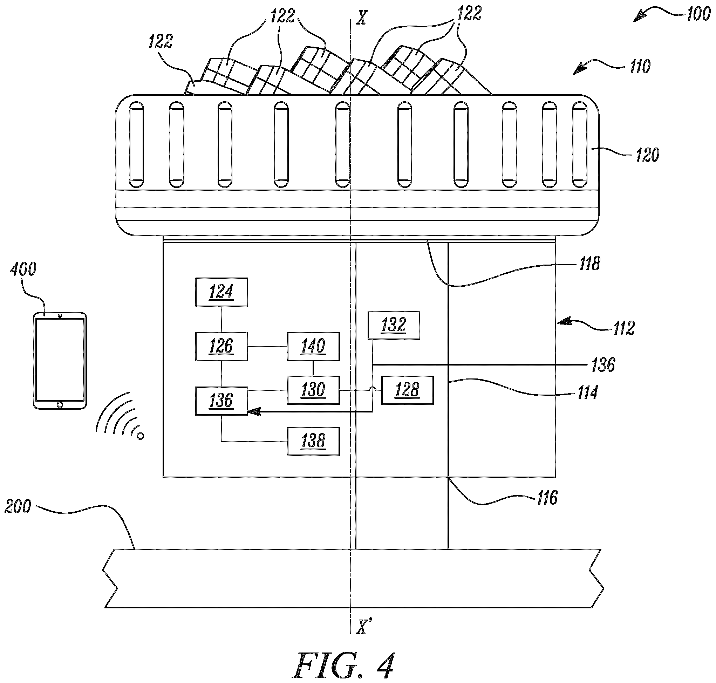

**FIG. 4** illustrates a schematic diagram of the irrigation system **100** of **FIG. 1** communicably coupled with the mobile device **400.**

The user may manually adjust the throwing distance through the at least one nozzle **122** positioned at the particular angular position **P.** The manual adjustment of the throwing distance **D** may be based on visual and/ or graphical observation of the arbitrarily shaped contour to be watered.

In other words, the user may manually increase or decrease the throwing distance **D** of the at least one nozzle **122** which may be positioned at the particular angular position **P.** The manual increase or decrease of the throwing distance **D** of the at least one nozzle **122** may be done to allow the outflow of the at least one nozzle **122** to reach the target throwing distance **d.** The manual increase or decrease of the throwing distance **D** of the at least one nozzle **122** may be done by visual and/ or graphical observation and/ or analysis. For example, the user may observe that by increasing the throwing distance **D,** the outflow is reaching beyond the target throwing distance **d**, or the user may observe that a further increase in the throwing distance **D** the at least one nozzle **122** is required to allow the outflow to reach the target throwing distance **d.** Accordingly, the user may manually adjust the throwing distance **D** by using an application on his mobile device **400.**

As illustrated in **FIG 4****,** the adjusting of the throwing distance **D** of the outflow may be performed by the user, particularly by using the graphical user interface, more particularly running on the mobile device **400.** The user may use the graphical user interface running on the mobile device **400,** laptop, and the like, to adjustably control the throwing distance **D.** Particularly, the graphical user interface may provide various graphical representations of the specified irrigation area **A** that may assist the user in analysis and adjustment of the throwing distance **D.** For example, the user may remotely adjust the throwing distance **D** with the help of the mobile device **400.** Further, the mobile device **400** may employ wireless communication technology to allow the user to adjust the throwing distance **D** of the outflow.

According to an exemplary embodiment of the invention, the target throwing distance **d** may be determined by the user, particularly by visually determining the target throwing distance **d.** The user may be physically present at the irrigation area **A** or may visualize a map of the irrigation area **A** in the mobile device **400** located at the remote location from the irrigation area **A** to determine the target throwing distance **d.** The determined target throwing distance **d** is then communicated for purpose of calibration of the sprinkler **110.**

Confirming the throwing distance **D** includes manually confirming the throwing distance **d**, particularly by using the graphical user interface, running on a mobile device **400.** According to an example, the user may visualize the real-time image or video of the irrigation area **A** with the arbitrarily shaped contour. The user may visualize the real-time image or video of the sprinkler operation such as the outflow and visually confirm the throwing distance, i.e., the user may visually confirm that **D = d.**

Thus, the present disclosure provides the method **300** of calibrating the water application device **110,** particularly the sprinkler **110,** for irrigating the area **A** with the arbitrarily shaped or irregular contour. The water application device **110** is a part of intelligent irrigation system **100** that includes controller **136,** one or more operational parameter sensors such as the flow sensor **132,** and other electronic circuitries to execute the method **300** of calibrating the water application device **110.** The method **300** may allow the water application device **110** to selectively and precisely irrigate one or more zones in the area **A** with arbitrarily shaped contour, such that each of the one or more zones may be at different distances from the water application device **110.** The method **300** allows the measurement of flowrate for different zones in the area **A** with arbitrarily shaped contour. The method **300** may allow for an efficient and quick control and adjustment of the valve **128** fluidly coupled with the at least one nozzle **122** of the water application device **110** to water different zones in the area **A** with arbitrarily shaped contour. The method **300** may facilitate judicious use of water by precisely irrigating the area **A** with arbitrarily shaped contour as per requirement. Further, the method **300** may facilitate efficient irrigation of the area **A** with arbitrarily shaped contour.

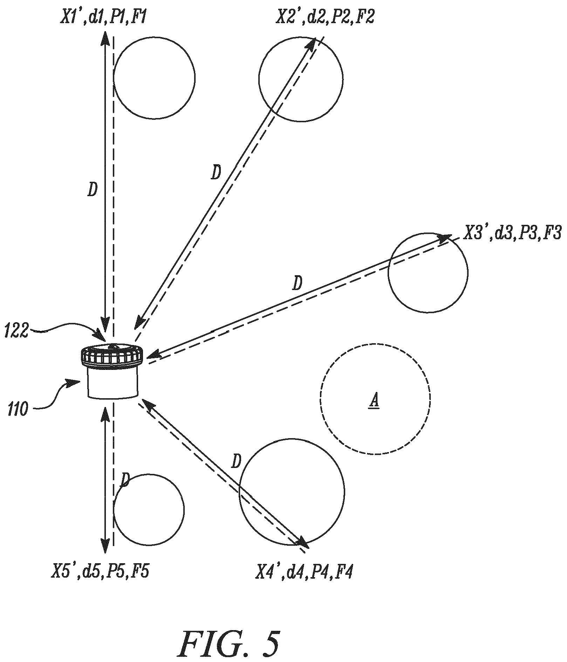

**FIG. 5** illustrates a simplified drawing illustrating an exemplary spot irrigation pattern at different throwing distances **D** from a single spot nozzle **122** of the sprinkler **110** in accordance with an exemplary embodiment of the present disclosure. The sprinkler **110** comprises a single nozzle **122** which is formed as a spot nozzle **122.** The sprinkler **110** comprising the single spot nozzle **122** is configured to irrigate different spot-shaped zones **X1**', **X2'**, **X3'**, **X4'**, and **X5'** of the area **A,** wherein each of the different zones **X1**', **X2'**, **X3'**, **X4'**, and **X5'** is a spot-shaped zone at different throwing distances **D.**

As an illustrative example as shown in **FIG. 5****,** the spot-shaped zone **X1'** requires the target throwing distance **d1** = 8 meters for irrigation, the single spot nozzle **122** is positioned at the first angular position **P1** = 0°, and the exemplarily determined first flowrate **F1** is 525 liters per hour. The spot-shaped zone **X2'** may require the target throwing distance **d2** = 9.4 meters for irrigation, the single spot nozzle **122** is positioned at the second angular position **P2** = 32°, and the exemplarily determined second flowrate **F2** is 595 liters per hour. The spot-shaped zone **X3'** may require the target throwing distance **d3** = 8.5 meters for irrigation, the single spot nozzle **122** is positioned at the third angular position **P3** = 68°, and the exemplarily determined third flowrate **F3** is 550 liters per hour. The spot-shaped zone **X4'** may require the target throwing distance **d4** = 6 meters for irrigation, the single spot nozzle **122** is positioned at the fourth angular position **P4** = 132°, and the exemplarily determined fourth flowrate **F4** is 425 liters per hour. The spot-shaped zone **X5'** may require the target throwing distance **d5** = 4 meters for irrigation, the single spot nozzle **122** is positioned at the fifth angular position **P5** = 180°, and the exemplarily determined fifth flowrate **F5** is 320 liters per hour. Hence, the respective target throwing distance **d1, d2, d3, d4, d5,** the respective angular position **P1, P2, P3, P4, P5,** and the respective determined flowrate **F1, F2, F3, F4, F5** of the spot-shaped zones **X1**', **X2'**, **X3'**, **X4', X5'** are similar to the ones described with reference to the zones **X1**, **X2, X3, X4, X5** in **FIG. 2****.**

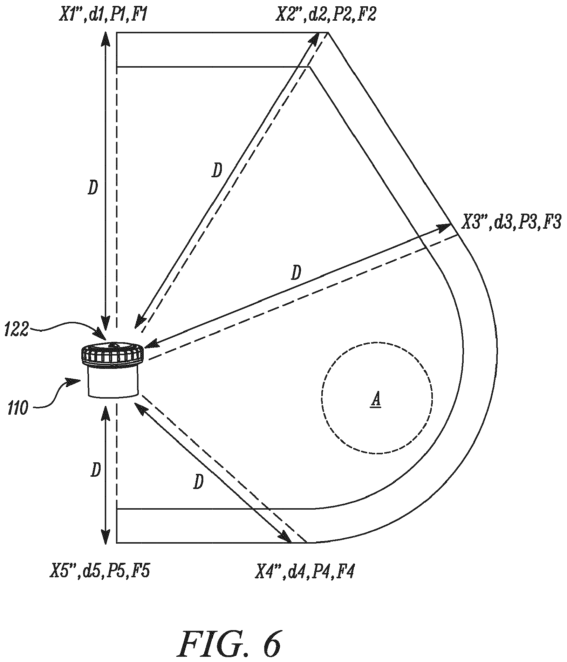

**FIG. 6** illustrates a simplified drawing illustrating an exemplary strip irrigation pattern at different throwing distances **D** from a further single spot nozzle **122** of the sprinkler **110** in accordance with an exemplary embodiment of the present disclosure. The sprinkler **110** comprises a single nozzle **122** which is formed as a spot nozzle **122.** The sprinkler **110** comprising the single spot nozzle **122** is configured to irrigate different strip-shaped zones **X1"**, **X2", X3", X4",** and **X5"** of the area **A,** wherein each of the different zones **X1"**, **X2", X3", X4",** and **X5"** is a strip-shaped zone at different throwing distances **D.**

As an illustrative example as shown in **FIG. 6****,** the strip-shaped zone **X1**" requires the target throwing distance **d1** = 8 meters for irrigation, the further single spot nozzle **122** is positioned at the first angular position **P1** = 0°, and the exemplarily determined first flowrate **F1** is 525 liters per hour. The strip-shaped zone **X2"** may require the target throwing distance **d2** = 9.4 meters for irrigation, the further single spot nozzle **122** is positioned at the second angular position **P2** = 32°, and the exemplarily determined second flowrate **F2** is 595 liters per hour. The strip-shaped zone **X3"** may require the target throwing distance **d3** = 8.5 meters for irrigation, the further single spot nozzle **122** is positioned at the third angular position **P3** = 68°, and the exemplarily determined third flowrate **F3** is 550 liters per hour. The strip-shaped zone **X4"** may require the target throwing distance **d4** = 6 meters for irrigation, the further single spot nozzle **122** is positioned at the fourth angular position **P4** = 132°, and the exemplarily determined fourth flowrate **F4** is 425 liters per hour. The strip-shaped zone **X5"** may require the target throwing distance **d5** = 4 meters for irrigation, the further single spot nozzle **122** is positioned at the fifth angular position **P5** = 180°, and the exemplarily determined fifth flowrate **F5** is 320 liters per hour. Hence, the respective target throwing distance **d1, d2, d3, d4, d5,** the respective angular position **P1, P2, P3, P4, P5,** and the respective determined flowrate **F1, F2, F3, F4, F5** of the strip-shaped zones **X1"**, **X2", X3", X4",** and **X5"** are similar to the ones described with reference to the zones **X1**, **X2, X3, X4,** and **X5** in **FIG. 2****.**

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Irrigation System
- **110**: Water Application Device, Sprinkler
- **112**: Body
- **114**: Water Channel
- **116**: Inlet
- **118**: Outlet
- **120**: Sprinkler Head
- **122**: Nozzle
- **124**: Drive Mechanism
- **126**: Motor
- **128**: Valve
- **130**: Motor
- **132**: Flow Sensor
- **134**: Output Signal
- **136**: Controller
- **138**: Memory
- **140**: Power Supply
- **200**: Water Supply Line
- **300**: Method
- **302**: Step
- **304**: Step
- **306**: Step
- **308**: Step
- **310**: Step
- **312**: Step
- **314**: Step
- **316**: Step
- **318**: Step
- **320**: Step
- **400**: Mobile Device
- **X-X'**: Central Axis
- **D**: Throwing Distance
- **d**: Target throwing distance
- **d1**: First Target Throwing Distance
- **d2**: Second Target Throwing Distance
- **d3**: Third Target Throwing Distance
- **d4**: Fourth Target Throwing Distance
- **d5**: Fifth Target Throwing Distance
- **X1**, **X2, X3, X5, X5**: Zone
- **P1**: First Angular Position
- **P2**: Second Angular Position
- **P3**: Third Angular Position
- **P4**: Fourth Angular Position
- **P5**: Fifth Angular Position
- **F1**: First Flowrate
- **F2**: Second Flowrate
- **F3**: Third Flowrate
- **F4**: Fourth Flowrate
- **F5**: Fifth Flowrate

## Claims

1. A method (**300**) of calibrating a water application device (**110**), particularly a sprinkler (**110**), wherein the water application device (**110**) comprises at least one nozzle (**122**),
the method (**300**) comprising:
positioning the at least one nozzle (**122**) at a first angular position (**P1**);
starting an outflow, particularly of water, from the nozzle (**122**);
adjusting a throwing distance (**D**) of the outflow;
if the throwing distance (**D**) substantially corresponds to a target throwing distance (**d**), confirming the throwing distance;
**characterized in that**:
determining a first flowrate (**F1**) at the confirmed throwing distance; and
storing the first flowrate (**F1**) together with the first angular position (**P1**).

2. The method (**300**) according to claim 1,
wherein the adjusting of the throwing distance (**D**) is a manually adjusting of the throwing distance (**D**), and/or
wherein the adjusting of the throwing distance (**D**) is performed by a user, particularly via a graphical user interface, more particularly running on a mobile device (**400**).

3. The method (**300**) according to any one of the preceding claims,
wherein the steps of positioning, starting, adjusting, confirming, determining and storing are repeated until the at least one nozzle (**122**) is calibrated at a pre-determined number of angular positions.

4. The method (**300**) according to any one of the preceding claims,
the method (**300**) further comprises
stopping the outflow from the nozzle (**122**), and subsequently,
positioning the at least one nozzle (**122**) at a second angular position (**P2**), in particular wherein the first angular position (**P1**) and the second angular position (**P2**) are distanced from each other by a pre-set angular distance.

5. The method (**300**) according to any one of the preceding claims,
wherein the first flowrate (**F1**) at the confirmed throwing distance is determined by a flow sensor (**132**).

6. The method (**300**) according to any one of the preceding claims,
wherein adjusting the throwing distance (**D**) of the outflow is performed by a user, particularly by using a graphical user interface, more particularly running on a mobile device (**400**).

7. The method (**300**) according to any one of the preceding claims,
wherein the target throwing distance (**d**) is determined by a user, particularly by visually determining the target throwing distance (**d**).

8. The method (**300**) according to any one of the preceding claims,
wherein confirming the throwing distance (**D**) comprises manually confirming the throwing distance (**D**), particularly by using a graphical user interface, in particular running on a mobile device (**400**).

9. A controller (**136**) configured to perform the method (**300**) of calibrating a water application device (**110**) according to any one of the preceding claims.

10. An irrigation system (**100**) comprising
a water application device (**110**),
a controller (**136**) according to claim 9, and
a memory (**138**),
wherein the controller (**136**) is configured to communicate with the memory (**138**),
wherein the first flowrate (**F1**) together with the first angular position (**P1**) is stored in the memory (**138**).

11. The irrigation system (**100**) according to claim 10,
wherein the water application device (**110**) is a sprinkler (**110**) comprising:
a body (**112**) defining a water channel (**114**),
wherein the water channel (**114**) is defined between an inlet (**116**) and an outlet (**118**) of the body (**112**) to allow a flow of water;
a sprinkler head (**120**) fluidly coupled to the body (**112**); and
at least one nozzle (**122**) disposed with the sprinkler head (**120**).

12. The irrigation system (**100**) according to according to claim 10 or 11, wherein the angular position of the at least one nozzle (**122**) is adjustable with adjustment in position of the sprinkler head (**120**).

13. The irrigation system (**100**) according to any one of the claims 10 to 12, wherein a magnitude of a throwing distance (**D**) of at least one nozzle (**122**) at a particular angular position is directly linked to the flowrate through the at least one nozzle (**122**).

14. The irrigation system (**100**) according to any one of the claims 10 to 13, wherein a flow sensor (**132**) determines the flowrate through the at least one nozzle (**122**), if the throwing distance (**D**) substantially corresponds to a target throwing distance (**d**).

15. The irrigation system (**100**) according to any one of the claims 10 to 14, wherein the controller (**136**) is communicably coupled with the flow sensor (**132**).
